# EUROPEAN PATENT SPECIFICATION

(11) **EP 2 151 932 B1**
(45) Date of publication and mention of the grant of the patent: **28.02.2018**
(21) Application number: 08740766.4
(22) Date of filing: 22.04.2008
(51) Int. Cl.: H04B 10/116, H05B 37/02

(54) **ILLUMINATING LIGHT COMMUNICATION SYSTEM AND TRANSMITTING DEVICE FOR ILLUMINATING LIGHT COMMUNICATION**
BELEUCHTUNGS-LICHTKOMMUNIKATIONSSYSTEM UND SENDEEINRICHTUNG FÜR DIE BELEUCHTUNGS-LICHTKOMMUNIKATION
SYSTÈME DE COMMUNICATION LUMINEUSE ÉCLAIRANT ET DISPOSITIF DE TRANSMISSION POUR COMMUNICATION LUMINEUSE ÉCLAIRANTE

(30) Priority: 23.04.2007 JP 2007113249
(43) Date of publication of application: 10.02.2010
(73) Proprietor: SUMITOMO CHEMICAL COMPANY, LIMITED, Chuo-ku Tokyo 104-8260 (JP)
(72) Inventor: ONO, Yoshinobu, Tsukubamirai-shi Ibaraki 300-2436 (JP)
(74) Representative: J A Kemp
(86) International application number: PCT/JP2008/057776
(87) International publication number: WO 2008/133252

(56) References cited:
- WO-A1-2006/079199
- WO-A1-2006/123697
- WO-A1-2007/004530
- JP-A- 2004 072 365
- JP-A- 2004 312 393
- JP-A- 2005 151 015
- JP-A- 2005 151 015
- JP-A- 2006 221 898
- JP-A- 2007 068 045
- US-A1- 2003 067 660

## Description

The present invention relates to an illuminating light communication system that transmits data using illumination light.

With the development of high-speed communication technology, indoor radio communication technology using light has been used. Particularly, a local area network (LAN) using infrared rays has spread in offices and homes. In infrared-ray communication, however, a shield existing between a transmitter and a receiver may cause interference with communication in many cases. Furthermore, communication easily becomes unstable because signal power is low.

As a communication system for solving such problems of the infrared-ray communication, a communication system using illumination light has been considered. As a light source for illumination light, a compound semiconductor-based white light emitting diode (hereinafter referred to as a white LED) has been used. Illumination using the white LED has superior features such as longer life, smaller size, and lower power consumption, as compared with illumination such as a fluorescent lamp, and has been expected to come in practice. Non-patent Document 1 and Patent Document 1 discuss an illuminating light communication system paying attention to the features of such a white LED.
Non-patent Document 1: "Experimental Examination of Modulation System Suitable for Visible Light Communication" (IEICE Technical Report OCS2005-19 (2005-5), pp.43-pp.48, The Institute of Electronics, Information and Communication Engineers (IEICE))
Patent Document 1: Japanese Patent Application Laid-Open publication No. 2003-318836.

In illumination light communication using a white LED, however, there is a limit to high-speed transmission of large-capacity light data. The reason for this is that the white LED is lower in response speed, as compared with a semiconductor laser used in optical fiber communication or the like. Although the white LED used for illumination is mainly of a type using a phosphor, the white LED of this type is even lower in response speed, as compared with an LED not using a phosphor.

US 2003/0067660 A1 discloses a communication system that includes at least one light-emitting device for emitting a light, and at least one light receiving device for receiving the light. The light-emitting device may include a light-emitting element driver, at least one non-modified non-signal light emitting element and at least one modified signal light emitting element.

An object of the present invention is to provide a new illuminating light communication system capable of transmitting large-capacity data at high speed.

To be solved the above mentioned problem, the invention provides an illuminating light communication system having a transmitting device and a receiving device. The transmitting device emits modulated light from an organic EL light source serving as an illuminating light source. The modulated light has been modulated according to data to be transmitted. The receiving device receives the modulated light emitted from the illuminating light source, converts the received modulated light into an electric signal, and demodulates the data from the converted electric signal obtained by the conversion.

In the invention, the illuminating light source may include a plurality of organic EL elements, and the light emission area of each of the organic EL elements may be not less than 10⁻⁸ cm² nor more than 10⁻¹ cm²

In the invention, the illuminating light source includes an organic EL element for communication that emits light modulated according to data to be transmitted, and an organic EL element for illumination that emits prescribed unmodulated light. The organic EL element for communication is formed of a fluorescence luminescent material. And the organic EL element for illumination is formed of a phosphorescence luminescent material.

In the invention, the transmitting device may include a control circuit that controls each of the organic EL elements constituting the illuminating light source, and the control circuit may be integrated with each of the organic EL elements.

An exemplary arrangement related to the invention provides a transmitting device for illumination light communication having a plurality of scanning lines, a plurality of data lines, an illuminating light source, and a driving circuit. The illuminating light source includes a plurality of light emitting elements provided in the form of a matrix. Each of the light emitting elements corresponds to intersection of the scanning line and the data line. The driving circuit that drives the illuminating light source by selecting the scanning line corresponding to the light emitting element in which data is written, and outputs data to be transmitted to the receiving device to the data line corresponding to the light emitting element in which the data is written. The driving circuit drives a plurality of sub-light sources in parallel in units of sub-light sources defined by dividing the illuminating light source into a plurality of regions, and supplies the same data to light emitting element groups belonging to the same sub-light source.

In said exemplary arrangement, the driving circuit may sequentially or simultaneously select the scanning lines corresponding to the same sub-light source while maintaining the levels of the data lines corresponding to the same sub-light source at a level corresponding to the same data in a period during which the scanning lines are selected.

In said exemplary arrangement, the light emitting element may include a holding unit for holding data supplied via the data lines, and an organic EL element for emitting light at a luminous intensity modulated according to the data held in the holding unit. In this case, both a current program method and a voltage program method may be employed as a driving method of the organic EL element. In the current program method, the driving circuit outputs to the data lines a data current having a current level according to the data. In this case, it is preferable that each of the light emitting elements further includes a programming transistor. The data is written to the holding unit on the basis of a gate voltage generated by causing the data current to flow to a channel of the programming transistor. On the other hand, in the voltage program method, the driving circuit outputs to the data lines a data voltage having a voltage level according to the data. In this case, the data is written to the holding unit on the basis of the data voltage.

According to the invention, an organic EL element having high-speed response characteristics as material features is used as the illuminating light source in the illuminating light communication system. The organic EL element enables a data transmission amount per unit time to be increased, thereby enabling larger-capacity data to be transmitted at higher speed, as compared with a conventional white LED.

According to the above mentioned exemplary arrangement, the illuminating light source is divided into the plurality of sub-light sources, and the sub-light sources are driven in parallel. This enables data to be transmitted in parallel, thereby enabling large-capacity data to be transmitted at high speed. The sub-light source is composed of the plurality of light emitting elements so that an amount of light required to establish illumination light communication can be easily ensured. Furthermore, data is not collectively written to all the light emitting elements constituting the illuminating light source but sequentially written thereto upon repeating parallel writing by selecting the scanning line. This enables the selection of the scanning line and data output to the data line to be performed at higher speed without requiring a driving circuit having a high driving capability, which can result in an increase in speed of the data writing.

Fig. 1 is a schematic view of an illuminating light communication system using a single light source;
Fig. 2 is a schematic view of an illuminating light communication system using a plurality of light sources.
Fig. 3 is a block diagram of a transmitting device using an active matrix type light source;
Fig. 4 is a circuit diagram of a light emitting element in a current program method;
Fig. 5 is an operation timing chart of a light emitting element in a current program method;
Fig. 6 is an illustration of sub-light sources;
Fig. 7 is an operation timing chart of illuminating light sources in one frame;
Fig. 8 is a circuit diagram of a light emitting element in a voltage program method; and
Fig. 9 is an operation timing chart of a light emitting element in a voltage program method.

1 : TRANSMITTING DEVICE
2 : RECEIVING DEVICE
3 : CONTROL CIRCUIT
4 : ORGANIC EL LIGHT SOURCE
5 : LIGHT RECEIVING UNIT
6 : DEMODULATION UNIT
7 : SERIES-PARALLEL CONVERSION CIRCUIT
8 : PARALLEL-SERIES CONVERSION CIRCUIT
9:LENS
10 : ILLUMINATING LIGHT SOURCE
11 : LIGHT EMITTING ELEMENT
12 : SCANNING LINE DRIVING CIRCUIT
13 : DATA LINE DRIVING CIRCUIT

A principal characteristic of the present embodiment is that an organic electroluminescence (EL) is used as an illuminating light source in illumination light communication. The organic EL has superior features that it can be designed in free size, can be microminiaturized, and can respond at high speed. Generally in order to use the organic EL for illumination light communication, each element area can be small. Since capacitance proportional to the area of a light emitting element defines the RC time constant of the element, the lower the RC time constant becomes (that is, the smaller the area becomes), the higher the response speed becomes. The element area (the light emission area) is preferably not less than 10⁻⁸ cm² nor more than 1 cm², more preferably not less than 10⁻⁸ m² nor more than 10⁻¹ cm², and still more preferably not less than 10⁻⁸ cm² nor more than 10⁻² cm². In a conventional LED, a light emitting element is formed on a semiconductor substrate, the semiconductor substrate is divided into chips, and the chips are attached to a wired circuit substrate. Since the semiconductor substrate is divided into chips, there is a natural limit to the miniaturization of the chip. In order to effectively use a high-cost semiconductor crystal, the area of the light emitting element formed on each of the chips is forced to be close to the area of the chip. In the conventional LED, therefore, it is difficult to produce a small element. On the other hand, in an organic EL element, a light emitting element is directly formed on a wired substrate and can be used as it is. Therefore, the degree of freedom in design is high, and a small element is also relatively easy to produce. From the foregoing reasons, the organic EL element can be suitably used as a light emitting element for illumination light communication.

In order to enable high-speed communication of large-capacity data, the data can be transmitted in parallel from a plurality of light emitting elements. For that purpose, the plurality of light emitting elements must be arranged. In the conventional LED, a larger area than a portion that actually emits light is required to arrange the LED chips or arrange the element composed of a seating and a resin lens on the chip. On the other hand, in the organic EL element, the light emitting elements are directly formed on the wired substrate and can be used as they are. Therefore, the light emitting elements are easy to highly integrate, and a small illumination member for communication (a transmitting device) can be realized as a whole.

In the conventional LED, the intensity of an illuminating light source in a transmitting device must be modulated using an external driving circuit such as a driver integrated circuit (IC). Therefore, it is difficult to miniaturize a unit constituting the transmitting device. On the other hand, in the organic EL, a control circuit composed of a modulation element such as a thin film transistor can be formed under an organic EL layer. If the control circuit and the light emitting elements are laminated and integrated, a unit is easy to miniaturize.

The use of the organic EL element enables the light emitting elements to be miniaturized and integrated and enables a laminated structure of the light emitting elements and the control circuit to be easily produced. Therefore, a transmitting device corresponding to high-speed and large-capacity illumination light communication can be realized by the small-sized unit.

Even if the response speed is increased by miniaturizing the light emitting element to reduce the RC time constant thereof, the response speed cannot be made equal to or higher than a speed defined in a light emission decay time. As the organic EL element, an element (a fluorescence element) that emits fluorescence (luminescence from a singlet) and an element (a phosphorescence element) that emits phosphorescence (luminescence from a triplet) are known depending on a mechanism for light emission thereof. Generally, the light emission decay time of the fluorescence is shorter than that of the phosphorescence, which is approximately 10 ns in the fluorescence, while being approximately 1 µs in the phosphorescence at room temperature. Whichever elements are used, therefore, the element itself can cope with transmission speeds up to approximately 1 Mbps.

Furthermore, an integrated device in which fluorescence and phosphorescence are mixed may be used as an illuminating light source. The fluorescence is suitable for high-speed communication applications because the response speed thereof can be made higher than that of the phosphorescence. On the other hand, the phosphorescence is suitable for illumination applications because the luminous efficiency thereof can be made higher than that of the fluorescence. In the organic EL, a luminescent material can be formed for each element. Therefore, the illuminating light source may be composed of a plurality of types of organic EL elements each including phosphorescence and fluorescence. In this case, the fluorescence element is used as a communication element for emitting modulated light according to data to be transmitted by assuming both an illumination function and a communication function. On the other hand, the phosphorescence element is used as an illumination element for emitting predetermined unmodulated light by assuming only an illumination function. This enables an illumination system in which an improvement in illumination efficiency and an increase in communication speed are compatible to be constructed. In such a configuration, the ratio of an amount of light on which communication information is superimposed to the whole amount of light from illumination decreases. Therefore, a system sensitive to a change in intensity of light is required as the receiving device. The ratio of an amount of fluorescence to the whole amount of light can be not less than 1 % nor more than 50 %.

Although the luminescent color of the organic EL element serving as the illuminating light source is not particularly limited, it can be white. In order to obtain white light by an organic EL light source, there are roughly two methods. One of the methods is a method for causing a red light emitting element (R element), a green light emitting element (G element), and a blue light emitting element (B element) to simultaneously emit light, to obtain a white color from the three primary colors of light. This method is classified into (1) a method for arranging RGB light emitting elements in a tile shape within a substrate surface and (2) a method for laminating RGB light emitting layers within one element. The other method is a method for obtaining a white color by using a luminescent layer itself composed of a white luminescent material having a plurality of wavelength peaks.

The organic EL element whose luminescent color is white emits light having a plurality of wavelengths by current injection and direct recombination without passing through a process of, by current injection, blue light emission -> phosphor excitation -> yellow light emission, like the conventional white LED using a phosphor. Therefore, the organic EL element is suitable for an illuminating light communication system because the response speed thereof is higher than that of the conventional white LED using a phosphor.

Materials for the organic EL element will be then described. As materials for the organic EL element, both a small molecule material and a polymer material can be used. As the luminescent material, it is used mainly an organic material that emits fluorescence or phosphorescence and, if necessary, a dopant for assisting the organic material as needed. Examples of materials for forming a luminescent layer that can be used in the present embodiment include dye-based materials, metal complex-based materials, and polymer-based materials, described below.

### (Dye-based materials)

Examples of the dye-based materials include a cyclopentamine derivative, a tetraphenylbutadiene derivative compound, a triphenylamine derivative, an oxadiazole derivative, a pyrazoloquinoline derivative, a distyrylbenzene derivative, a distyrylarylene derivative, a pyrrole derivative, a thiophene ring compound, a pyridine ring compound, a perynone derivative, a perylene derivative, an oligothiophene derivative, a trifumanylamine derivative, an oxadiazole dimer, and a pyrazoline dimer.

### (Metal complex-based materials)

Examples of the metal complex-based materials include metal complexes having Al, Zn, Be, a rare earth metal such, as Tb, Eu, or Dy, or a heavy metal such as Ir, Pt, Au, Ru, Os, or Re as a center metal and having oxadiazole, thiadiazole, phenylpyridine, phenylbenzimidazole, or a quinoline structure as aligand, for example, an alumiquinolinol complex, a benzoquinolinolberyllium complex, a benzooxazole zinc complex, a benzothiazole zinc complex, an azomethyl zinc complex, a porphyrin zinc complex, and an europium complex. Particularly, a metal complex using Ir, Pt, Eu, Ru, Os, or Re as a center metal can be used as a high-efficiency phosphorescent material.

### (Polymer-based materials)

Examples of the polymer-based materials include a polyparaphenylenevinylene derivative, a polythiophene derivative, a polyparaphenylene derivative, a polysilane derivative, a polyacetylene derivative, a polyfluorene derivative, a polyvinylcarbazole derivative, and materials obtained by polymerizing the above-mentioned dye-based materials and metal complex-based materials.

Examples of blue luminescent materials out of the materials forming the light emitting layer include a distyrylarylene derivative, an oxadiazole derivative, and their polymers, a polyvinylcarbazole derivative, a polyparaphenylene derivative, and a polyfluorene derivative. Among them, a polyvinylcarbazole derivative, a polyparaphenylene derivative, and a polyfluorene derivative, which are the polymer-based materials, are preferable.

Examples of green luminescent materials include a quinacridone derivative, a coumarin derivative, and their polymers, a polyparaphenylenevinylene derivative, and a polyfluorene derivative. Among them, a polyparaphenylenevinylene derivative and a polyfluorene derivative, which are the polymer-based materials, are preferable.

Examples of red luminescent materials include a coumarin derivative, a thiophene ring compound, and their polymers, a polyparaphenylenevinylene derivative, a polythiophene derivative, and a polyfluorene derivative. Among them, a polyparaphenylenevinylene derivative, a polythiophene derivative, and a polyfluorene derivative, which are the polymer-based materials, are preferable.

### (Dopant materials)

A dopant can be added to the light emitting layer for the purpose of improving luminous efficiency and changing a luminous wavelength. Examples of the dopant include a perylene derivative, a coumarin derivative, a rubrene derivative, a quinacridone derivative, a squallium derivative, a porphyrin derivative, styryl-based dyes, a tetracene derivative, a pyrazolone derivative, decacyclene, and phenoxazon. The thickness of the light emitting layer is generally approximately 20 to 2000Å.

When the light emitting layer and another charge transporting material are laminated, a hole transport layer is formed on the anode before the light emitting layer is provided. Alternatively, an electron transport layer can be formed after the light emitting layer is provided.

### (Hole transport layer)

The hole transport layer is provided between the anode and the light emitting layer or between the hole injection layer and the light emitting layer. Examples of hole transporting materials forming the hole transport layer include heterocyclic compounds represented by triphenylamine-based materials, bis-based materials, a pyrazoline derivative, and a porphyrin derivative, and polymer-based materials such as polycarbonate having a monomer in its side chain, a styrene derivative, polyvinyl carbazole, and polysilane. The thickness of the hole transport layer can be approximately 1 nm to 1 µm.

### (Hole injection layer)

The hole injection layer can be provided between the anode and the hole transport layer or between the anode and the light emitting layer. Examples of materials forming the hole injection layer include phenylamine-based materials, starburst-type amine-based materials, phthalocyanine-based materials, oxides such as vanadium oxide, molybdenum oxide, ruthenium oxide, and aluminum oxide, amorphous carbon, polyaniline, and a polythiophene derivative.

### (Electron transport layer)

The electron transport layer can be provided between the light emitting layer and the cathode or between the light emitting layer and the electron injection layer. Examples of materials forming the electron transport layer include materials having generally stable radical anions formed therein and having a high ionization potential, for example, oxadiazoles and an alumiquinolinol complex. Specific examples include a 1, 3, 4-oxadiazole derivative, a 1, 2, 4-triazole derivative, and an imidazole derivative. The thickness of the electron transport layer can be approximately 1 nm to 1 µm.

### (Electron injection layer)

The electron injection layer is provided between the electron transport layer and the cathode or between the light emitting layer and the cathode. As the electron injection layer, an electron injection layer composed of a monolayer structure of a Ca layer or an electron injection layer composed of a laminated structure of a Ca layer and a layer formed of one type or two or more types of metals in Group IA and Group IIA of the periodic system excluding Ca and having a work function of 1.5 to 3.0 eV and their oxides, halides, and carbonates can be provided depending on the type of the light emitting layer. Examples of the metals, in Group IA of the periodic system, and having a work function of 1.5 to 3.0 eV or their oxides, halides, and carbonates include lithium, lithium fluoride, sodium oxide, lithium oxide, and lithium carbonate. Examples of the metals, in Group IIA of the periodic system excluding Ca, and having a work function of 1.5 to 3.0 eV or their oxides, halides, and carbonates include strontium, magnesium oxide, magnesium fluoride, strontium fluoride, barium fluoride, strontium oxide, and magnesium carbonate. The electron injection layer is formed by an evaporation method, a sputtering method, a printing method, or the like. The thickness of the electron injection layer can be approximately 1 nm to 1 µm.

Functional layers other than the above-mentioned layers may be provided in a range where an object and an effect of the present invention are not lost. Examples of the functional layers include a layer with a low refractive index, a reflecting layer, a light absorbing layer, a barrier layer, and a sealing compound used for a normal organic EL element or a light emitting display member, and further ones provided with barriers.

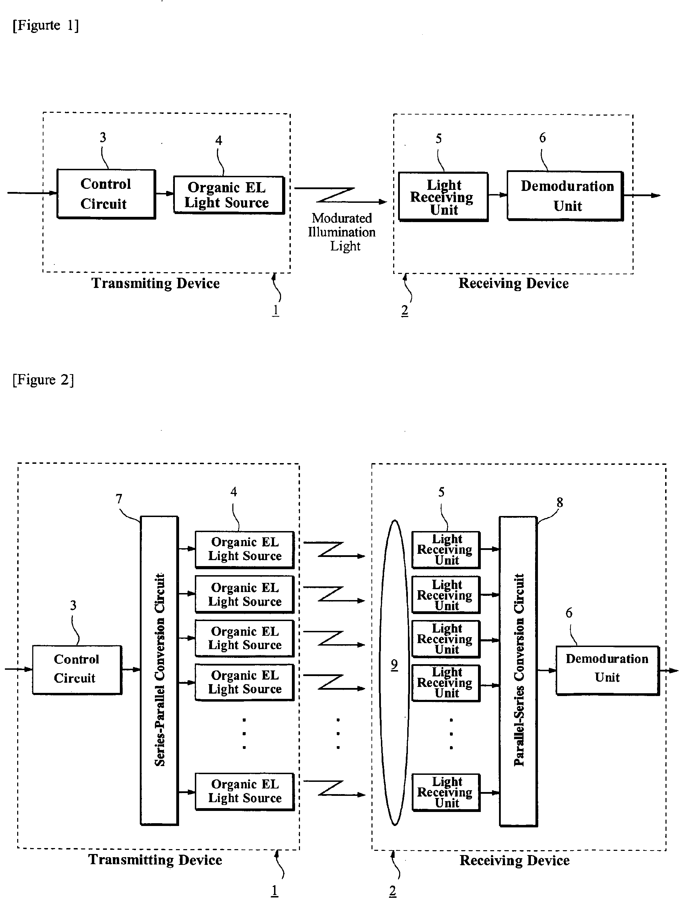

Fig. 1 is a schematic view of an illuminating light communication system using a single light source. The communication system is mainly composed of a transmitting device 1 and a receiving device 2. The transmitting device 1 includes a control circuit 3 and an organic EL light source 4. The organic EL light source 4 serving as an illuminating light source is controlled by the control circuit 3, and emits modulated light according to data to be transmitted (transmission information) (e.g., light whose flashing is controlled or light whose light amount is controlled) toward the receiving device 2. The receiving device 2 includes a light receiving unit 5 and a demodulation unit 6. The light receiving unit 5 contains a photoelectric conversion device, and receives the modulated light emitted from the organic EL light source 4 and converts the received modulated light into an electric signal. The demodulation unit 6 demodulates the original data (transmission information) from the electric signal obtained by the conversion in the light receiving unit 5.

In a state where the transmitting device 1 does not transmit data to the receiving device 2, the organic EL light source 4 can be used as it is as an illumination device. On the other hand, when the transmitting device 1 transmits data, data to be transmitted is supplied to the control circuit 3. The control circuit 3 that has been supplied with the data controls the organic EL light source 4 in the basis of the data. This causes the light modulated by the data to be transmitted to be emitted from the organic EL light source 4. As described above, the organic EL light source 4 has high-speed response characteristics. Even if the organic EL light source 4 flashes the modulated light at high speed and changes the light amount thereof at high speed, therefore, the modulated light is not visually sensed and seems to shine in a substantially constant light amount. Therefore, the modulated light emitted from the organic EL light source 4 can be also used as it is as illumination light without giving an uncomfortable feeling to a person.

In order to transmit data with a large capacity of not less than approximately 1 Gbps, a large number of organic EL light sources 4 may be arranged in a two-dimensional manner in the transmitting device 1 and operated in parallel. In order to realize such a parallel system using a conventional LED, the large number of LEDs must be arranged in a two-dimensional manner and interconnected to a divider, so that the parallel system is forced to be large in size. When the white LED is replaced with an organic EL, each of the completed light emitting elements is not arranged on a wiring board later but an integrated device in which organic EL elements are arranged in a two-dimensional manner can be produced on a substrate from the beginning. Therefore, a very compact transmitting device 1 can be realized even if an element such as a divider is added thereto.

Fig. 2 is a schematic view of an illuminating light communication system using a plurality of light sources. In this configuration, a plurality of sets of organic EL light sources 4 and light receiving units 5 is provided in the basis of the configuration illustrated in Fig. 1, a series-parallel conversion circuit 7 is added to the transmitting device 1, and a parallel-series conversion circuit 8 and a lens 9 are further added to the receiving device 2. In the transmitting device 1, the plurality of organic EL light sources 4 is arranged in a two-dimensional manner. Circuit elements similar to the circuit elements illustrated in Fig. 1 are assigned the same reference numerals and hence, the description thereof is not repeated.

The series-parallel conversion circuit 7 divides serial data to be transmitted into a plurality of packets (parallel data), and respectively supplies the packets obtained by the division to the organic EL light sources 4. This causes the organic EL light sources 4 to respectively emit light beams modulated according to the packets. The emitted modulated light beams are respectively received by pixels in the light receiving units 5 after being spatially separated by the lens 9. The light beams respectively received by the pixels are digitized by an analog-to-digital converter (not illustrated), and are converted into serial data by the parallel-series conversion circuit 8. The demodulation unit 6 demodulates the original data from the serial data. The large-capacity data can be transmitted at high speed by thus driving the large number of organic EL light sources 4 in parallel.

Although in the transmitting device 1 illustrated in Fig. 2, control (including modulation control) of the organic EL light sources 4 may be carried out using a driver integrated circuit (IC) serving as an external driving circuit, the respective organic EL light sources 4 (or organic EL elements) and a circuit element composing the control circuit 3 or the like may be integrally formed. A thin film transistor (TFT) can be used as such a circuit element. Examples of the thin film transistor include a polysilicon transistor, an amorphous silicon transistor, and an organic transistor using an organic semiconductor material. The transmitting device 1 can be further miniaturized by integrally forming the thin film transistor and the organic EL elements.

A transmitting device using an active matrix type light source will be then described as an example of the transmitting device 1 in the above-mentioned illuminating light communication system. The active matrix type means a type of arranging light emitting elements serving as the minimum unit of light emission in the form of a matrix and driving each of the light emitting elements by a driving element such as a TFT. When the active matrix type light source is configured using the organic EL elements serving as an example of the light emitting elements, a method for driving the same is broadly classified into a current program method and a voltage program method. The "current program method" means a method for supplying data to a data line on a current basis, and the "voltage program method" means a method for supplying data to a data line on a voltage basis.

### (Current program method)

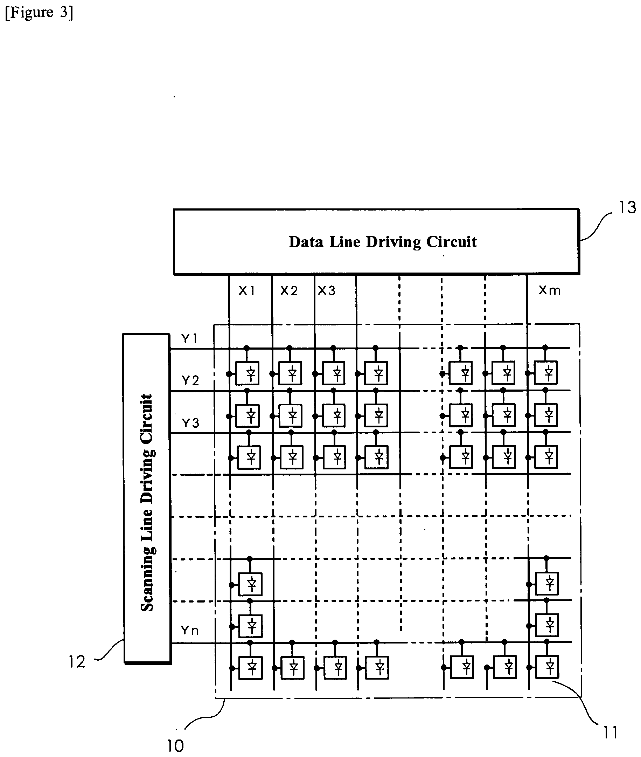

Fig. 3 is a block diagram of a transmitting device using an active matrix type light source. An example of an illuminating light source 10 is an active matrix type panel for driving an organic EL element by a driving element such as a TFT. The illuminating light source 10 has light emitting elements 11 corresponding to m dots by n lines arranged therein in the form of a matrix (in a two-dimensional manner). Furthermore, the illuminating light source 10 has scanning line groups Y1 to Yn each extending in a horizontal direction and data line groups X1 to Xm each extending in a vertical direction provided therein, and the light emitting elements 11 are respectively arranged so as to correspond to their intersections. Although in the present arrangement, the one light emitting element 11 is used as the minimum unit of light emission, the one light emitting element 11 may be composed of three sub-elements R, G, and B. In Fig. 3, power supply lines for supplying predetermined voltages Vdd and Vss to each of the light emitting elements 11, for example, are omitted.

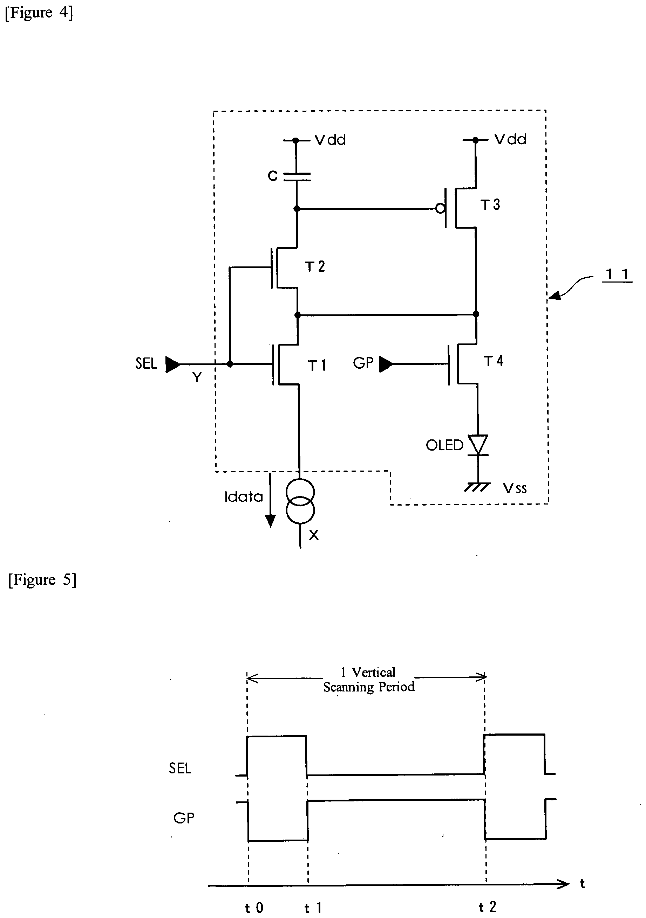

Fig. 4 is a circuit diagram of the light emitting element 11 in the current program method. The one light emitting element 11 includes an organic EL element OLED serving as an example of the light emitting element, four transistors T1 to T4, and a capacitor C for holding data. Although the transistors T1, T2, and T4 are of an n-channel type, and the transistor T3 is of a p-channel type, this is illustrative only. The present invention is not limited to the same.

The luminance of the organic EL element OLED written as a diode is set by a driving current Ioled flowing through itself. The transistor T1 has its gate connected to one scanning line Y supplied with a scanning signal SEL and has its source connected to one data line X supplied with a data current Idata. The transistor T1 has its drain common-connected to the source of the transistor T2, the drain of the transistor T3, and the drain of the transistor T4. The transistor T2 has its gate connected to the scanning line Y supplied with the scanning signal SEL, similarly to the transistor T1. The transistor T2 has its drain common-connected to one electrode of the capacitor C and the gate of the transistor T3. A power supply voltage Vdd is applied to the other electrode of the capacitor C and the source of the transistor T3. The transistor T4 having its gate supplied to a driving signal GP is provided between the drain of the transistor T3 and the anode of the organic EL element OLED. A reference voltage Vss lower than the power supply voltage Vdd is applied to the cathode of the organic EL element OLED. As a circuit element for holding data, the capacitor C can be also replaced with a memory storing multi-bit data (e.g., a static random access memory (SRAM)).

Fig. 5 is an operation timing chart of the light emitting element 11 illustrated in Fig. 4. Timing at which the selection of the light emitting element 11 is started by line sequential scanning of the scanning lines Y1 to Yn by the scanning line driving circuit 12 is taken as t0, and timing at which the selection of the light emitting element 11 is then started is taken as t2. A period from t0 to t2 is divided into a former programming period from t0 to t1 and a latter driving period from t1 to t2.

In the programming period from t0 to t1, data is written to the capacitor C. First, at the timing t0, the scanning signal SEL rises to a high level (hereinafter referred to as an "H level"), and both the transistors T1 and T2 serving as switching elements are turned on (rendered conductive). This causes the data line X and the drain of the transistor T3 to be electrically connected to each other while causing the transistor T3 to be a diode-connected transistor having its gate and drain electrically connected to each other. The transistor T3 causes the data current Idata supplied from the data line X to flow through its own channel. A voltage corresponding to the data current Idata is generated as a gate voltage Vg. Charges corresponding to the generated gate voltage Vg are stored in the capacitor C connected to the gate of the transistor T3, and data corresponding to the amount of the stored charges is written to the capacitor C.

In the programming period from t0 to t1, the transistor T3 functions as a programming transistor for writing data to the capacitor C based on a data signal flowing through the channel thereof. Since the driving signal GP is maintained at a low level (hereinafter referred to as an "L level"), the transistor T4 remains off (non-conductive). Therefore, a path of the driving current Ioled for the organic EL element OLED is cut off by the transistor T4, so that the organic EL element OLED does not emit light.

In the subsequent driving period from t1 to t2, the driving current Ioled flows through the organic EL element OLED, so that the luminance of the organic EL element OLED is set. First, at the timing t1, the scanning signal SEL falls to the L level, so that both the transistors T1 and T2 are turned off. This causes the data line X supplied with the data current Idata and the drain of the transistor T3 to be electrically separated from each other and causes the gate and the drain of the transistor T3 to be also electrically separated from each other. The gate voltage Vg corresponding to the charges stored in the capacitor C continues to be applied to the gate of the transistor T3. In synchronization with the falling edge of the scanning signal SEL at the timing t1 (not necessarily at the same timing), the driving signal GP that has been at the L level before the timing t1 rises to the H level. This causes the path of the driving current Ioled via the transistors T3 and T4 and the organic EL element OLED to be formed toward the reference voltage Vss from the power supply voltage Vdd. The driving current Ioled flowing through the organic EL element OLED corresponds to a channel current of the transistor T3, and its current level is controlled by the gate voltage Vg caused by the charges stored in the capacitor C. In the driving period from t1 to t2, the transistor T3 functions as a driving transistor for supplying the driving current Ioled to the organic EL element OLED. As a result, the organic EL element OLED emits light at a luminous intensity modulated according to the driving current Ioled, i.e., according to the data held in the capacitor C.

As illustrated in Fig. 3, a driving circuit for driving the illuminating light source 10 includes the scanning line driving circuit 12 and the data line driving circuit 13, and both the driving circuits are operated in cooperation with each other under synchronization control by a host device (not illustrated). The scanning line driving circuit 12 is mainly composed of a shift register, an output circuit, and so on, and performs line sequential scanning for outputting the scanning signal SEL to the scanning lines Y1 to Yn to select the scanning lines Y1 to Yn in a predetermined selection order. The scanning signal SEL takes a binary signal level of the H level or the L level. The scanning line Y corresponding to a row (a light emitting element group corresponding to one horizontal line) to which data is to be written and the other scanning lines Y are respectively set to the H level and the L level. In one vertical scanning period (1F), respective rows are selected in a predetermined selection order. The scanning line driving circuit 12 also outputs the driving signal GP (or its base signal) for carrying out conduction control of the transistor T4 illustrated in Fig. 2 in addition to the scanning signal SEL. The driving signal GP causes a driving period, i.e., a period during which the luminance of the organic EL element OLED included in the light emitting element 11 is set to be set.

On the other hand, the data line driving circuit 13 supplies data signals respectively corresponding to the data lines X1 to Xm on a current basis in synchronization with the line sequential scanning by the scanning line driving circuit 12. In the case of the current program method, the data line driving circuit 13 includes a variable current source for converting data (a data voltage Vdata) for defining the modulation degree of the modulated light emitted from the light emitting element 11 into the data current Idata. The data line driving circuit 13 simultaneously performs simultaneous output of the data current Idata to the row in which data is to be written this time in one horizontal scanning period (1H) and dot sequential latch of data relating to the row in which data is written in the subsequent horizontal scanning period. In a horizontal scanning period, m data corresponding to the number of data lines X are sequentially latched. In the subsequent horizontal scanning period, the m data that have been latched are simultaneously outputted to the data lines X1 to Xm after being converted into the data current Idata.

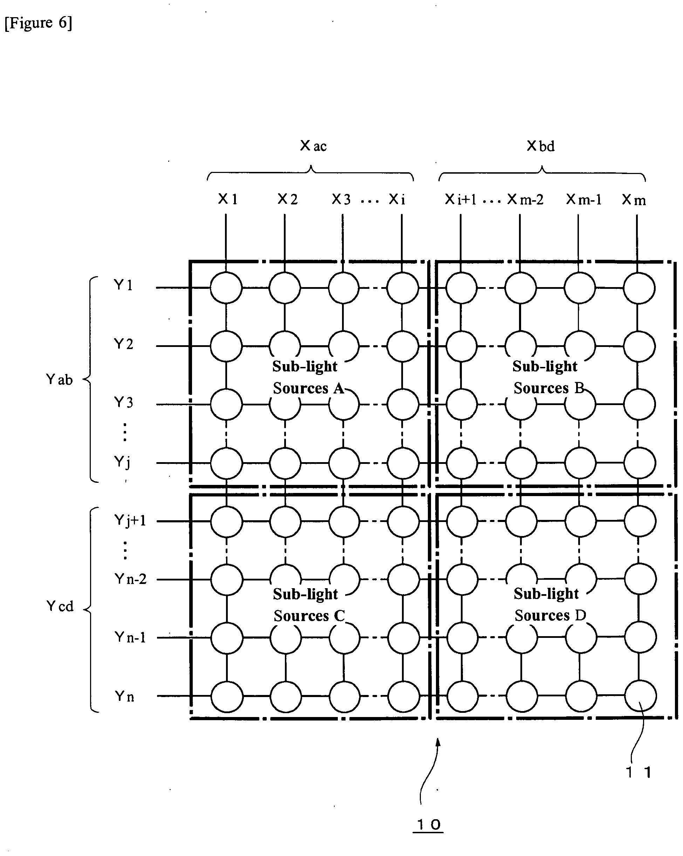

The scanning line driving circuit 12 and the data line driving circuit 13 drive a plurality of sub-light sources set in the illuminating light source 10 in parallel in units of sub-light sources. As illustrated in Fig. 6, sub-light sources A to D are defined by dividing the illuminating light source 10 along the length and breadth thereof. In an example of Fig. 6, the illuminating light source 10 is divided into four parts so that four sub-light sources A to D are set. Each of the sub-light sources A to D is composed of a plurality of light emitting elements 11 existing in its inner part. Although the plurality of light emitting elements 11 belonging to the same sub-light source is all controlled to enter the same light emitting state, the different sub-light sources are controlled independently of and parallel to one another. This causes four independent transmission channels to be formed in the illuminating light source 10. Data (all are at the same current level) respectively supplied to the data lines X1 to Xi with the scanning lines Y1 to Yj selected are together supplied to each of the light emitting elements 11 within the sub-light source A. This causes the light emitting state of the sub-light source A to be controlled. Data respectively supplied to the data lines Xi+1 to Xm in this state are together supplied to each of the light emitting elements 11 within the sub-light source B. This causes the light emitting state of the sub-light source B to be controlled. On the other hand, data respectively supplied to the data lines X1 to Xi with the scanning lines Yj+1 to Yn selected are together supplied to each of the light emitting elements 11 within the sub-light source C. This causes the light emitting state of the sub-light source C to be controlled. Data respectively supplied to the data lines Xi+1 to Xm in this state are together supplied to each of the light emitting elements 11 within the sub-light source D. This causes the light emitting state of the sub-light source D to be controlled. In the following description, the scanning lines Y1 to Yj corresponding to each of the sub-light sources A and B are generically referred to as a "scanning line Yab", and the scanning lines Yj+1 to Yn corresponding to each of the sub-light sources C and D are generically referred to as a "scanning line Ycd". Similarly, the data lines X1 to Xi corresponding to each of the sub-light sources A and C are generically referred to as a "data line Xac", and the data lines Xi+1 to Xm corresponding to each of the sub-light sources B and D are generically referred to as a "data line Xbd".

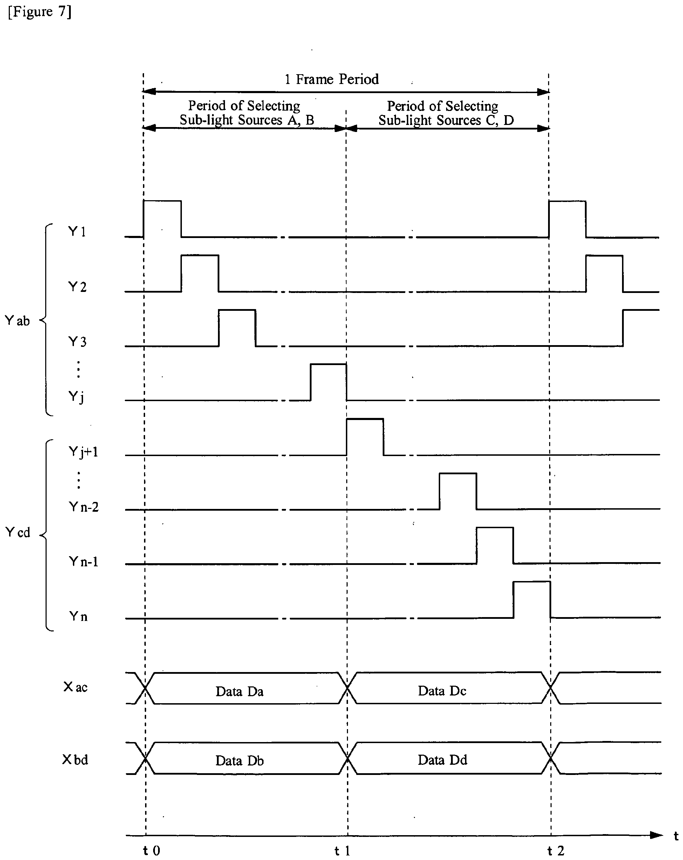

Fig. 7 is an operation timing chart of an illuminating light source in one frame. Scanning lines Y from the uppermost scanning line Y1 to the lowermost scanning line Yn are sequentially selected in this order. In this case, a one-frame period from t0 to t2 required to write data to the whole illuminating light source 10 is classified into a former period from t0 to t1 for selecting the sub-light sources A and B and a latter period from t1 to t2 for selecting the sub-light sources C and D.

The period from t0 to t1 for selecting the sub-light sources A and B corresponds to a period elapsed since the selection of the scanning line Y1 belonging to the scanning line Yab was started until the selection of the scanning line Yj is terminated. In the period from t0 to t1, data Da for the sub-light source A is common and supplied to the data line Xac, and the data line Xac is maintained at a level corresponding to the data Da. Although not only the sub-light source A but also the sub-light source C is connected to the data line Xac, the sub-light source C is electrically separated because the scanning line Ycd is not selected. Therefore, the data Da supplied to the data line Xac is supplied to only the sub-light source A, and is written in response thereto in the sub-light source A. In the period from t0 to t1, data Db for the sub-light source B is common and supplied to the data line Xbd, and the data line Xbd is maintained at a level corresponding to the data Db. Although not only the sub-light source B but also the sub-light source D is connected to the data line Xbd, the sub-light source D is electrically separated because the scanning line Ycd is not selected. Therefore, the data Db supplied to the data line Xbd is supplied to only the sub-light source B, and is written in response thereto in the sub-light source B.

On the other hand, the period from t1 to t2 for selecting the sub-light sources C and D corresponds to a period elapsed since the selection of the scanning line Yj+1 belonging to the scanning line Ycd was started until the selection of the scanning line Yn is terminated. In the period from t1 to t2, data Dc for the sub-light source C is common and supplied to the data line Xac, and the data line Xac is maintained at a level corresponding to the data Dc. In the case, the sub-light source A connected to the data line Xac is electrically separated because the scanning line Yab is not selected. Therefore, the data Dc supplied to the data line Xac is supplied to only the sub-light source C, and is written in response thereto in the sub-light source C. In the period from t1 to t2, data Dd for the sub-light source D is common and supplied to the data line Xbd, and the data line Xbd is maintained at a level corresponding to the data Dd. In the case, the sub-light source B connected to the data line Xbd is electrically separated because the scanning line Yab is not selected. Therefore, the data Dd supplied to the data line Xbd is supplied to only the sub-light source B, and is written in response thereto in the sub-light source D.

Fig. 7 illustrates a case where scanning line groups corresponding to the same sub-light source are sequentially scanned, the scanning line groups may be simultaneously collectively selected if the driving capability of the driving circuit can be sufficiently ensured. This point is the same for the voltage program method, described below.

### (Voltage program method)

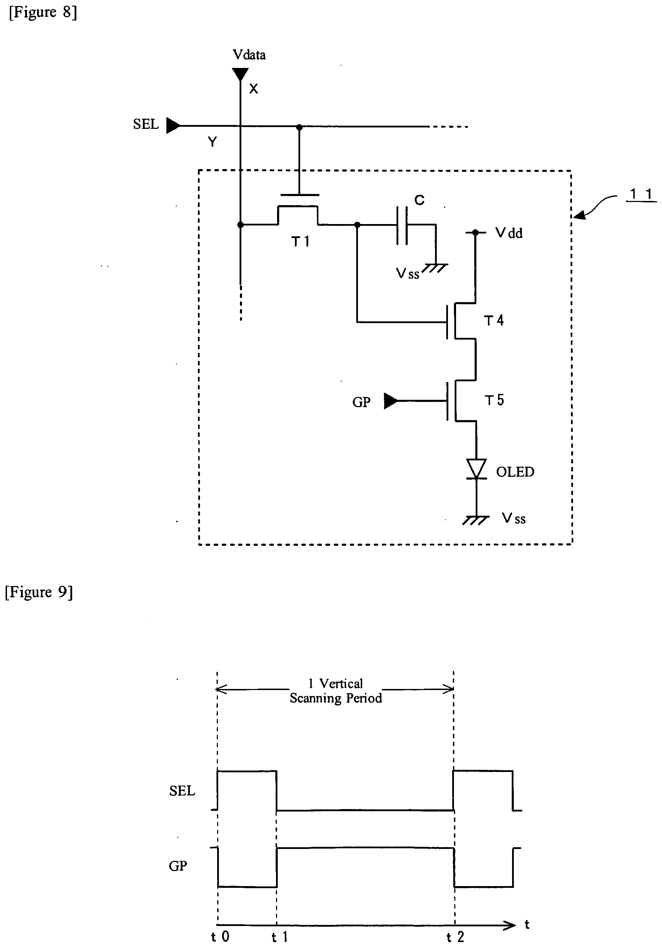

Although even in the voltage program method, the whole configuration of the transmitting device is substantially the same as that illustrated in Fig. 3, a variable current source of the data line driving circuit 4 is not required in terms of outputting a data voltage Vdata to the data line X as it is. Fig. 8 is a circuit diagram of the light emitting element 11 in the voltage program method, which is particularly referred to as a conductance control (CC) method. The one light emitting element 11 includes an organic EL element OLED, three transistors T1, T4, and T5, and a capacitor C. Although all the transistors T1, T4, and T5 are of an n-channel type, this is illustrative only. The present invention is not limited to the same.

The switching transistor T1 has its gate connected to a scanning line supplied with a scanning signal SEL and has its drain connected to a data line X supplied with the data voltage Vdata. The switching transistor T1 has its source common-connected to one electrode of the capacitor C and the gate of the driving transistor T4. A voltage Vss is applied to the other electrode of the capacitor C, and a power supply voltage Vdd is applied to the drain of the driving transistor T4. The control transistor T5 is conducted and connected by a driving signal GP and has its source connected to the anode of the organic EL element OLED. The voltage Vss is applied to the cathode of the organic EL element OLED.

Fig. 9 is an operation timing chart of the light emitting element 11 illustrated in Fig. 8. First, at timing t0, the scanning signal SEL rises to an H level, so that the switching transistor T1 is turned on. This causes the data voltage Vdata supplied to the data line X to be applied to the one electrode of the capacitor C via the switching transistor T1, and charges corresponding to the data voltage Vdata are stored in the capacitor C (data writing). In a period from the timing t0 to timing t1, the driving signal GP is maintained at an L level, so that the control transistor T5 remains off. Since a current path of the driving current Ioled corresponding to the organic EL element OLED is cut off, therefore, the organic EL element OLED does not emit light in the former period from to to t1.

In a latter period from t1 to t2 subsequent to the former period from t0 to t1, the driving current Ioled corresponding to the charges stored in the capacitor C flows through the organic EL element OLED, so that the organic EL element OLED emits light. At the timing t1, the scanning signal SEL falls to an L level, so that the switching transistor T1 is turned off. This causes the application of the data voltage Vdata corresponding to the one electrode of the capacitor C to be stopped. However, an equivalent of the gate voltage Vg is applied to the gate of the driving transistor T4 by the charges stored in the capacitor C. In synchronization with the falling edge of the scanning signal SEL at the timing t1, the driving signal GP that has been at the L level before the timing t1 rises to the H level, and continues to be at the H level up to timing t2 at which the subsequent selection of the light emitting element 11 is started. Thus, a current path of the driving current Ioled is formed, so that the organic EL element OLED emits light at a luminous intensity modulated according to the data held in the capacitor C.

Even in the voltage program method, parallel driving of the sub-light sources A to D illustrated in Fig. 6 can be realized according to the operation timing chart illustrated in Fig. 7, as in the current program method.

According to the present embodiment, an organic EL light source having high-speed response characteristics as material features is used as the illuminating light source 10 in the illuminating light communication system. The organic EL light source enables a data transmission amount per unit time to be increased, enabling larger-capacity data to be transmitted at higher speed, as compared with a conventional white LED.

According to an exemplary arrangement, the illuminating light source 10 is divided into the plurality of sub-light sources A to D, and the sub-light sources A to D are driven in parallel. This enables data to be transmitted in parallel, thereby enabling large-capacity data to be transmitted at high speed. Each of the sub-light sources A to D is composed of the plurality of light emitting elements 11 so that an amount of light required to establish illumination light communication can be easily ensured. Furthermore, data is not collectively written to all the light emitting elements 11 constituting the illuminating light source 10 but sequentially written thereto upon repeating partial writing by selecting the scanning line. This enables the selection of the scanning line and data output to the data line to be performed at higher speed without requiring a driving circuit having a high driving capability, which can result in an increase in speed of the data writing.

### Industrial Applicability

As described above, the illuminating light communication system and the transmitting device for illumination light communication according to the present invention are widely applicable to a system for transmitting data using illumination light.

## Claims

1. An illuminating light communication system comprising:
a transmitting device adapted to emit modulated light from an organic electroluminescent, "EL", light source serving as an illuminating light source, the modulated light having been modulated according to data to be transmitted; and
a receiving device adapted to receive the modulated light emitted from the illuminating light source, to convert the received modulated light into an electric signal, and to demodulate the data from the converted electric signal obtained by the conversion, wherein
the illuminating light source includes
an organic EL element for communication adapted to emit light modulated according to data to be transmitted, and
an organic EL element for illumination adapted to emit prescribed unmodulated light, wherein
the organic EL element for communication is formed of a fluorescence luminescent material, and
the organic EL element for illumination is formed of a phosphorescence luminescent material.

2. The illuminating light communication system according to claim 1, wherein
the illuminating light source includes a plurality of organic EL elements, and
the light emission area of each of the organic EL elements is not less than 10⁻⁸ cm² nor more than 10⁻¹ cm².

3. The illuminating light communication system according to any one of claims 1 to 2, wherein
the transmitting device includes a control circuit adapted to control each of the organic EL elements constituting the illuminating light source, and
the control circuit is integrated with each of the organic EL elements.

## Patentansprüche

1. Kommunikationssystem mit Beleuchtungslicht, das aufweist:
eine Sendevorrichtung, die geeignet ist, moduliertes Licht von einer organischen elektrolumineszenten ("EL") Lichtquelle zu emittieren, die als Beleuchtungslichtquelle dient, wobei das modulierte Licht in Übereinstimmung mit zu sendenden Daten moduliert wurde; und
eine Empfangsvorrichtung, die geeignet ist, das von der Beleuchtungslichtquelle emittierte modulierte Licht zu empfangen, um das empfangene modulierte Licht in ein elektrisches Signal umzuwandeln und die Daten aus dem durch die Umwandlung erhaltenen umgewandelten elektrischen Signal zu demodulieren, wobei die Beleuchtungslichtquelle aufweist:
ein organisches EL-Element zur Kommunikation, das geeignet ist, Licht zu emittieren, das in Übereinstimmung mit zu sendenden Daten moduliert ist, und
ein organisches EL-Element zur Beleuchtung, das geeignet ist, vorgeschriebenes unmoduliertes Licht zu emittieren, wobei
das organische EL-Element zur Kommunikation aus einem lumineszenten Fluoreszenzmaterial gebildet ist und
das organische EL-Element zur Beleuchtung aus einem lumineszenten Phosphoreszenzmaterial gebildet ist.

2. Kommunikationssystem mit Beleuchtungslicht nach Anspruch 1, wobei die Beleuchtungslichtquelle mehrere organische EL-Elemente aufweist und die Lichtemissionsfläche jedes der organischen EL-Elemente mindestens 10⁻⁸ cm² und höchstens 10⁻¹ cm² beträgt.

3. Kommunikationssystem mit Beleuchtungslicht nach Anspruch 1 oder 2, wobei
die Sendevorrichtung eine Steuerschaltung aufweist, die geeignet ist, jedes der organischen EL-Elemente zu steuern, die die Beleuchtungslichtquelle bilden, und
die Steuerschaltung mit jedem der organischen EL-Elemente integriert ist.

## Revendications

1. Système de communication par lumière d'éclairage, comprenant :
un dispositif émetteur conçu pour émettre de la lumière modulée à partir d'une source de lumière électroluminescente, « EL », organique servant de source de lumière d'éclairage, la lumière modulée ayant été modulée conformément à des données à transmettre ; et
un dispositif récepteur conçu pour recevoir la lumière modulée émise par la source de lumière d'éclairage, pour convertir la lumière modulée reçue en un signal électrique, et pour démoduler les données à partir du signal électrique converti obtenu par la conversion, dans lequel
la source de lumière d'éclairage comporte
un élément EL organique pour communication conçu pour émettre de la lumière modulée conformément à des données à transmettre, et
un élément EL organique pour éclairage conçu pour émettre de la lumière non modulée prescrite, dans lequel
l'élément EL organique pour communication est formé d'un matériau luminescent fluorescent, et
l'élément EL organique pour éclairage est formé d'un matériau luminescent phosphorescent.

2. Système de communication par lumière d'éclairage selon la revendication 1, dans lequel la source de lumière d'éclairage comporte une pluralité d'éléments EL organiques, et l'aire d'émission de lumière de chacun des éléments EL organiques n'est pas inférieure à 10⁻⁸ cm² ni supérieure à 10⁻¹ cm².

3. Système de communication par lumière d'éclairage selon l'une quelconque des revendications 1 à 2, dans lequel
le dispositif émetteur comporte un circuit de commande conçu pour commander chacun des éléments EL organiques constituant la source de lumière d'éclairage, et
le circuit de commande est intégré avec chacun des éléments EL organiques.
